# EUROPEAN PATENT APPLICATION

(11) **EP 4 708 100 A1**
(43) Date of publication of application: **11.03.2026**
(21) Application number: 25199680.7
(22) Date of filing: 02.09.2025
(51) Int. Cl.: G06F 21/60, B22F 10/80, B22F 10/85, B29C 64/393, B33Y 30/00, B33Y 50/00, B33Y 50/02, H04L 9/32, H04L 9/40

(54) **SYSTEMS AND METHODS FOR SECURE ADDITIVE MANUFACTURING**

(30) Priority: 05.09.2024 US 202418825850
(71) Applicant: General Electric Company, Cincinnati, Ohio 45215 (US)
(72) Inventor: LEENDERTSE, Paul, Niskayuna, 12309 (US); CITRINITI, Thomas, Niskayuna, 12309 (US); INGLESTON, Bartholomew, Niskayuna, 12309 (US); MCCANN, Adam, West Chester, 45069 (US); BRUNS, Kirk Lars, Niskayuna, 12309 (US)
(74) Representative: Openshaw & Co.

(57) **Abstract**

Systems, apparatus, computer-readable medium, and associated methods for secure additive manufacturing are disclosed. An example apparatus includes an inbound one-way data diode (21) to receive, authenticate, and route an inbound file (215) in a first direction within a secure additive manufacturing system (200), the inbound one-way data diode (210) unable to transmit data out of the secure additive manufacturing system (200) in a second direction. The example apparatus includes an additive manufacturing machine (110) to build a part, the build of the part adjusted by the inbound file (215) when authenticated by the inbound one-way data diode (210). The example apparatus includes an outbound one-way data diode (220) to authenticate and transmit outbound data (225) in the second direction to an external system outside the secure additive manufacturing system (200), the outbound one-way data diode (220) unable to transmit data into the secure additive manufacturing system (200) in the first direction.

## Description

### FIELD

The present disclosure relates to additive manufacturing, and more specifically, to systems and methods for secure additive manufacturing.

### BACKGROUND

Additive manufacturing machines and associated processes are used to build a variety of parts. Many manufactured parts, such as engine parts, require a high degree of specificity, integrity, and reliability to operate according to specifications and withstand failure. A controller or control system can be used to control operation of an additive manufacturing machine, for example. Unauthorized access to the controller/control system can threaten operation of the additive manufacturing machine. Compromised operation of the additive manufacturing machine can result in build failure, part degradation, loss of quality control, and/or other damage. There is an unmet need for secure additive manufacturing.

### BRIEF DESCRIPTION OF THE DRAWINGS

FIG. 1 depicts an example additive manufacturing environment.
FIG. 2A is a block diagram of an example secure additive manufacturing system according to one or more examples shown and described herein.
FIG. 2B is a block diagram of an example secure additive manufacturing system according to one or more examples shown and described herein.
FIG. 3 illustrates an example configuration of the secure additive manufacturing system of FIGS. 2A-2B to transmit encrypted data to an additive manufacturing machine.
FIG. 4 is a flow diagram representative of example hardware logic, machine readable instructions, hardware implemented state machines, and/or any combination thereof for implementing the example secure additive manufacturing system of FIGS. 2A-3.
FIG. 5 is a block diagram of an example processor platform and associated circuitry structured to execute the instructions of FIG. 4 to implement the example secure additive manufacturing system of FIGS. 2A-3.
FIG. 6 is a schematic of an example implementation of the processor platform and associated circuitry of FIG. 5.
FIG. 7 is a schematic of another example implementation of the processor platform and associated circuitry of FIG. 5.

The figures are not to scale. Instead, the thickness of the layers or regions may be enlarged in the drawings. In general, the same reference numbers will be used throughout the drawing(s) and accompanying written description to refer to the same or like parts. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other. Stating that any part is in "contact" with another part means that there is no intermediate part between the two parts.

Descriptors "first," "second," "third," etc. are used herein when identifying multiple elements or components which may be referred to separately. Unless otherwise specified or understood based on their context of use, such descriptors are not intended to impute any meaning of priority, physical order, or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

The present disclosure generally relates to devices, systems, and methods for securing an additive manufacturing system or environment. Additive manufacturing is a process by which a three-dimensional structure is built, usually in a series of layers, based on a digital model of the structure. While some examples of additive manufacturing technology rely on sintering or melting/fusing using an energy source to form the structure, rather than "printing", in which material is deposited at select locations, the term "print" is often used to describe the additive manufacturing process (e.g., three-dimensional (3D) printing, 3D rapid prototyping, etc.). Examples of additive manufacturing techniques include Fused Deposition Modeling, Electron Beam Melting, Laminated Object Manufacturing, Selective Laser Sintering (including Direct Metal Laser Sintering, also referred to as Direct Metal Laser Melting or Selective Laser Melting), BinderJet, Directed Energy Deposition (DED), Digital Light Processing (DLP), and Stereolithography, among others. Although 3D printing technology is continually developing, the process to build a structure layer-by-layer is complex, inefficient, and prone to failure. An error in the 3D process can lead to weakness or failure in the manufactured part and, therefore, waste, risk, and other unreliability.

The phrase "additive manufacturing apparatus" is used interchangeably herein with the phrase "printing apparatus", the phrase "additive manufacture machine", the phrase "additive manufacturing device", and the term "printer". The term "print" is used interchangeably herein with the word "build", referring to an action to build a structure using an additive manufacturing apparatus, regardless of the particular additive manufacturing technology being used to form the structure. As used herein, print and printing refer to the various forms of additive manufacturing and include three-dimensional (3D) printing or 3D rapid prototyping, as well as sintering or melting/fusing technologies. Additive manufacturing systems may use an electron-beam or a laser beam to manufacture builds, for example. Additive manufacturing systems may include multiple electron-beam guns or laser designs. Examples of additive manufacturing or printing techniques include Fused Deposition Modeling, Electron Beam Melting, Laminated Object Manufacturing, Selective Laser Sintering (including Direct Metal Laser Sintering also referred to as Direct Metal Laser Melting or Selective Laser Melting), and Stereolithography among others.

For example, selective laser melting (SLM), also known as direct metal laser melting (DMLM), Direct Metal Laser Sintering (DMLS), or laser powder bed fusion (LPBF), is a rapid prototyping, 3D printing, or additive manufacturing (AM) technique designed to use a high power-density laser to melt and fuse metallic powders together. The SLM process can fully melt the metal material into a solid three-dimensional part, for example.

SLM is a part of additive manufacturing in which a high power density laser is used to melt and fuse metallic powders together. With SLM, thin layers of atomized fine metal powder are evenly distributed onto a substrate plate (e.g., a metal, etc.) using a coating mechanism. The substrate plate is fastened to an indexing table that moves in the vertical (Z) axis. This takes place inside a chamber containing a tightly controlled atmosphere of inert gas, either argon or nitrogen at oxygen levels below 500 parts per million, for example. Once each layer has been distributed, each two-dimensional (2D) slice of the part geometry is fused by selectively melting the powder. Melting of the powder is accomplished with a high-power laser beam, such as an ytterbium (Yb) fiber laser with hundreds of watts, etc. The laser beam is directed in the X and Y directions with a plurality (e.g., two, four, etc.) of high frequency scanning mirrors. The laser energy is intense enough to permit full melting (welding) of the particles to form solid metal. The process is repeated layer after layer until the part is complete.

Direct Metal Laser Melting (DMLM) or Direct Metal Laser Sintering (DMLS) are particular type(s) of SLM that use a variety of alloys and allows prototypes to be functional hardware made out of the same material as production components. Since the components are built layer by layer, it is possible to design organic geometries, internal features, and challenging passages that could not be cast or otherwise machined. For example, DMLS produces strong, durable metal parts that work well as functional prototypes and/or end-use production parts, for example.

Objects are built directly from a file generated from CAD (computer-aided design) data. The DMLS process begins by slicing 3D CAD file data into layers (e.g., from 20 to 100 micrometers thick, 30-120 µm thick, 50-150 µm thick, etc.), creating a two-dimensional (2D) image of each layer. For example, a format of the 3D CAD file is a .stl file used on most layer-based 3D printing or stereolithography technologies. This file is then loaded into a file preparation software package that assigns parameters, values and physical supports that allow the file to be interpreted and built by different types of additive manufacturing machines, for example.

In DMLS/DMLM, use of a laser to selectively melt thin layers of tiny particles yields objects exhibiting fine, dense, and homogeneous characteristics. The DMLS machine uses a high-powered 200 watt Yb-fiber optic laser, for example. The machine includes a build chamber area including a material dispensing platform and a build platform along with a re-coater blade used to move new powder over the build platform. The technology fuses metal powder into a solid part by melting it locally using the focused laser beam. A melt pool is formed when the powder melts from exposure to the laser beam radiation. Parts are built up additively layer by layer (e.g., using layers 10 micrometers thick, 20 µm thick, 30 µm thick, 50 µm thick, etc.).

The DMLS process begins with a roller spreading a thin layer of metal powder on the print bed. Next, a laser is directed based on the CAD data to create a cross-section of the object by completely melting metal particles. The print bed is then lowered so the process can be repeated to create the next object layer. After all the layers are printed, the excess unmelted powder is brushed, blown, or blasted away. The object typically requires little, if any, finishing.

The machine can include and/or operate with monitoring and control systems and methods, such as iterative learning control, continuous autocalibration, and real-time melt pool monitoring, etc., to introduce a step change in the build process performance and stability, for example. Certain examples enable melt pool monitoring, iterative learning control, continuous auto-calibration, real-time melt pool control, filter monitoring, pump monitoring, jet application monitoring, cathode and beam monitoring, etc.

Other additive manufacturing methods, such as Electron Beam Melting (EBM), can be used for crack-prone metal alloys, such as titanium, etc. With EBM, high-performance electron beam sources and in-situ process monitoring using "self-generated" x-ray imaging and backscatter electron technologies can be used for improved quality control. A binder jet allows fast printing at lower cost with novel support structure designs and clean-burning binders to solve two key technology challenges of sintering distortion and material properties to enable additive manufacturing for automotive, other transportation solutions, powder generation, etc. EBM utilizes a raw material in the form of a metal powder or a metal wire, which is placed under a vacuum (e.g., within a vacuum sealed build chamber). Generally speaking, the raw material is fused together from heating via an electron beam.

Systems that utilize EBM generally obtain data from a 3D computer-aided design (CAD) model and use the data to place successive layers of the raw material using an apparatus to spread the raw material, such as a powder distributor. The successive layers are melted together utilizing a computer-controlled electron beam. As noted above, the process takes place under vacuum within a vacuum sealed build chamber, which makes the process suited to manufacture parts using reactive materials having a high affinity for oxygen (e.g., titanium). In certain examples, the process operates at higher temperatures (up to about 1,200 °C) relative to other additive manufacturing processes, which can lead to differences in phase formation though solidification and solid-state phase transformation.

Examples described herein are applicable to other additive manufacturing modalities employing other types of additive manufacturing devices beyond those disclosed herein. For example, directed energy deposition (DED), direct ceramic, BinderJet, stereolithography, photopolymerization, etc., can benefit from the monitoring, analysis, and correction described herein.

Certain examples provide a flexible security architecture with rigid infrastructure and rules for data flow including one-way data diodes and/or a secure file transfer mechanism. When the one-way data diodes are combined with the secure file transfer mechanism, the combination ensures unidirectional, trusted data flows into and out of the additive manufacturing machine in the additive manufacturing environment. In the secure architecture, the additive manufacturing machine is equipped with a data input port, and data comes to that data input port can only flow through a one-way data diode to an additive machine controller (e.g., an industrial computer, other computing device, etc.) to be processed by the additive machine controller and/or relayed to the additive manufacturing machine. However, since the data diode is one-directional, data cannot travel out from the additive machine controller to an external device. Data output by the additive manufacturing machine is transmitted from an output port of the additive manufacturing machine to an analytics processor (e.g., an analytics computer, other computing device, etc.). An output port of the analytics processor is attached to a data diode, which only allows data traffic out from the output port to an external device. No return data traffic is allowed to enter the analytics processor from an external device because the one-way data diode only allows outbound data flow, not incoming data flow.

In certain examples, secure file transfer allows only authorized design files, such as design files that have been cryptographically signed and encrypted or otherwise trusted, to be received by the additive manufacturing machine and be printed/built. Communication between the additive machine controller and the analytics processor is secured through a certificate-based authentication and uses a root of trust provided by a trusted platform module, for example, as defined in a chain of trust.

The secure architecture reduces a risk of malicious programs being received by the additive manufacturing machine and providing a command-and-control channel for an attacker. The secure architecture also reduces risk of an attacker using the outbound channel from the analytics processor to push malicious code back onto the additive manufacturing machine or performing activities that affect the confidentiality, integrity, and/or availability of the additive manufacturing machine, for example.

As such, a system of two one-way data diodes creates a physical barrier to control the direction of data flow on and off the additive manufacturing machine. The system enforces a data flow pattern that makes it difficult to get data on and off the additive manufacturing machine without properly signing data packages. Further, the system and its secure architecture can control which files are printed on which additive manufacturing machines, and an associated build quantity, by embedding a decryption mechanism into the build file that verifies digital rights directly. Thus, unidirectional data diodes make it physically impossible for data to flow in both directions, and secure file transfer ensures confidentiality and integrity of design files. Files are integrated with digital rights management and are automatically encrypted and decrypted for the additive manufacturing machine. While sending unencrypted design files to the additive manufacturing machine creates a risk to the confidentiality and integrity of such files, using one-way data diodes addresses a risk of misconfiguring firewalls and/or gateway, protects against attacks and malicious intrusion, and ensures that data flow only the intended direction and over a predefined path.

Certain examples provide a secure architecture for an additive manufacturing machine that is built using a chain of trust framework, starting with a root of trust formed at the time of machine manufacture. As such, a hardware root of trust is established to provide a trusted supply chain foundation that ensures the integrity and authenticity of system components at the time of manufacture using a secure cryptographic processor such as a trusted platform module (TPM), secure enclave, etc.

A trusted, secure startup boot sequence then only loads trusted and validated operating system (OS) and software components. The secure boot sequence protects the system from threats that can compromise the OS before it loads and reduces the risk of unauthorized or malicious activity. Certain examples provide a trusted OS, which is a hardened, secure, and verifiable OS with strong access controls, aligned with strict security technical implementation guides and protocols. A trusted execution environment is provided through a secured operating environment with allow-listed applications and full disk encryption. The trusted execution environment prevents unknown and/or untrusted applications from running and ensures that data at rest on the computer disk is encrypted.

Certain examples provide digitally signed software and updates as well as secure development practices driven by a software development and security lifecycle methodology to ensure authenticity of software by an original equipment manufacturer (OEM). Secure network transmission of data between machine components and a secure file transfer mechanism for transferring files design files to and from the additive manufacturing machine are provided. Such secure communications creates a double layer of encryption to reduce risk of unauthorized disclosure or modification of data. Access control can be provided through enforced restrictions and permissions allowing only authenticated users and/or processes to take authorized and auditable actions on the system through mandatory and discretionary access controls based on a zero-trust approach.

In certain examples, security information and event management (SIEM) capabilities are provided to log, monitor, detect, and alert regarding potentially significant security events, anomalies, unexpected access, data movement, etc. Such monitoring and auditing can be leveraged by security operations and information technology teams, for example. Additionally, when an update or patch is to be downloaded, only validated patching of the OS and additive manufacturing platform is allowed to manage software supply chain vulnerabilities. Only essential update activities are allowed to bolster system security and mitigate exploitation risk.

For some customers, configurations, and/or builds, designs printed on an additive manufacturing machine (also referred to as an additive printer, a 3D printer, etc.) need protection of confidentiality and integrity. Additionally, additive manufacturing machine availability can be of particular importance. If designs on machine are exfiltrated without proper authorization, it is possible that they fall into the wrong hands. Alternatively or additionally, an ability to interfere with a build of a part by an additive manufacturing machine, such as to create a vulnerable or inferior part or a part unsuitable for its intended purpose can risk failure, damage, and/or business instability.

Malicious and/or other unauthorized access can be a threat to confidentiality, integrity, and availability, for example. Confidentiality matters, for example, because cyber espionage groups target valuable intellectual property (IP), and malicious cyber actors can hold companies ransom, forcing large payments to get IP back or to keep IP from being shared publicly. Integrity matters because a risk of modification of an initial part design can lead to printer part failures or malfunctioning. Additionally, ransomware is a pervasive threat in the industrial controls space and has a large impact on system availability. Ransomware locks machines and in some cases, through connectivity with command and control systems, will attempt data exfiltration.

Building additive manufacturing machines that use the chain of trust model provides a platform of standard work for building systems securely from the supply chain on up. Combining use of diode technology to control ingress and egress data flows on the additive manufacturing machine with use of a secure file transfer mechanism to control which designs can be printed on which machine and for how many copies, protects the confidentiality and integrity of data moving on and off of the additive manufacturing machine, and helps to protect the additive manufacturing machine's availability.

In certain examples, to secure data flows in and out of the additive manufacturing machine, secure network transmission is provided between machine components and for design files and other files (e.g., configurations, settings, etc., in part, process, and/or preparation files, etc.) moving on and off the additive manufacturing machine. Existing technologies are available to help protect data in transit using encryption, such as a Transport Layer Security protocol (TLS), cryptography algorithm (e.g., post-quantum crypto algorithm, etc.) and firewalls can be used to restrict data types and data flow direction. These existing technologies, however, are prone to vulnerabilities as well as human error in misconfiguration, etc. As such, certain examples improve upon these vulnerable technologies by implementing one-way data diodes for inbound and outbound data flow in the additive manufacturing system. A first, fiber optic data diode on the inbound side of the additive machine controller restricts data inbound to the additive machine controller, which can be passed along to the additive manufacturing machine, and a second fiber optic data diode on the outbound side of the analytics processor restricts data outbound from the additive manufacturing machine through the analytics processor to an external device. Such diodes and related implementation technology can also leverage allow-listing of certain file types and packet structures.

A data diode can only physically allow data to flow in one direction. Data diodes (such as manufactured by Owl Cyber Defense, etc.) provide deterministic data transfer in only one direction (unidirectional) to segment and protect networks, devices, and other digital assets. A data diode includes a sending circuit and a receiving circuit to provide a physical barrier to the direction of data movement. An inbound diode prevents unauthorized exfiltration of data from the additive manufacturing machine outbound through the inbound data flow channel. Additionally, software associated with the inbound receiving circuit can limit file types coming onto the additive manufacturing machine by filtering out and dropping unwanted files. Data does need to come off the machine (e.g., for reporting/verification purposes, fleet comparison and control, coordination between the additive manufacturing machine and another external system, etc.) and this will be done through the analytics computer or processor. An outbound diode allows data to be output from the additive manufacturing machine but prevents the channel used to move data off the additive manufacturing machine from being used by malicious actors to create a backdoor into the system.

Additionally, design files can be encrypted, and the additive manufacturing machine and/or its additive machine controller can decrypt the design files to configure a build. An encryption manager can control where the files can be printed and for how many times. The inbound diode can be configured to pass the encrypted files through to the additive manufacturing machine.

In certain examples, a design file to build a part can be generated and encrypted outside the additive manufacturing environment and provided to the additive machine controller in the additive manufacturing environment. The file is received at the inbound one-way data diode. An enforcement mechanism on the additive machine controller authenticates and authorizes the file for decryption and processing at the additive machine controller and/or transmission to configure the additive manufacturing machine. The enforcement mechanism ensures that the additive manufacturing machine has a trust relationship with a secure manager to decrypt and authorize the file for printing. The secure manager is an intermediary between a workstation/other computing device and the additive manufacturing machine that controls which additive manufacturing machine can print which files and for how many copies.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

As used herein, the terms "system," "unit," "module," "engine," "component," etc., may include a hardware and/or software system that operates to perform one or more functions. For example, a module, unit, or system may include a computer processor, controller, and/or other logic-based device that performs operations based on instructions stored on a tangible and non-transitory computer readable storage medium, such as a computer memory. Alternatively, a module, unit, or system may include a hard-wires device that performs operations based on hardwired logic of the device. Various modules, units, engines, and/or systems shown in the attached figures may represent the hardware that operates based on software or hardwired instructions, the software that directs hardware to perform the operations, or a combination thereof.

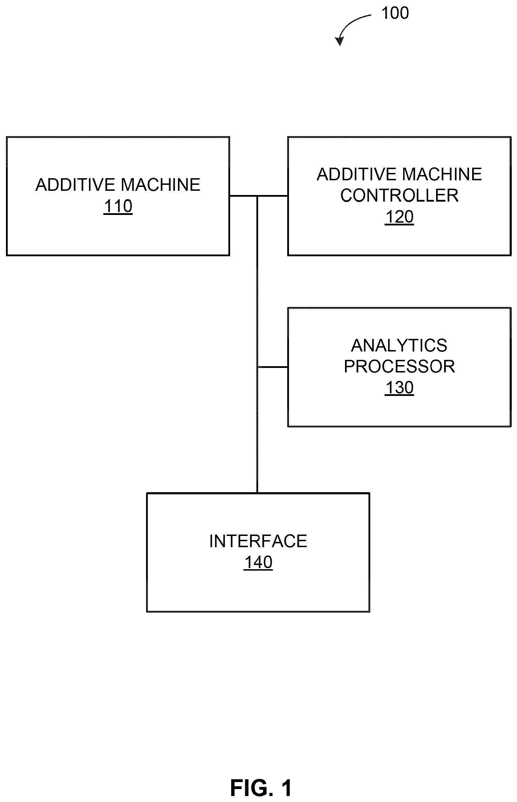

Turning to the figures, FIG. 1 depicts an example additive manufacturing environment or system 100. In the example system 100 of FIG. 1, an additive manufacturing machine 110 and its associated additive machine controller 120 are in communication with an analytics processor 130 which leverages data from the additive manufacturing machine 110 and/or its additive machine controller 120 to model the additive manufacturing machine 110 and its operation, assess a health of the additive manufacturing machine 110, score or otherwise evaluate build quality (e.g., layerwise in real time or near real time, etc.), and/or otherwise monitor, model, evaluate, and modify a configuration, performance, control, etc., of the additive manufacturing machine 110. While the analytics processor 130 is shown as a single device in the example of FIG. 1, the analytics processor 130 can be implemented as one or more field programmable gate arrays (FPGAs), processors, trusted platform modules (TPMs), and/or other computing devices, for example. When the analytics processor 130 is implemented using a plurality of devices, the FPGA(s) and processor(s) can coordinate with each other toward a common data fusion and/or analysis. The multiple devices can be synchronized to a same time base, build meta-data, and/or machine control events, for example.

Design or build files can be provided via an interface 140. The additive machine controller 120 can process the file(s) for the additive manufacturing machine 110 and/or provide the file(s) to the additive manufacturing machine 110. A plurality of process parameters affect the microstructure and mechanical properties of a 3D printed object using a powder bed fusion and/or other laser-based melting process, including scanning speed (e.g., in millimeters per second (mm/s), etc.), beam speed/speed function, beam current or beam power (e.g., in Watts (W), etc.), layer thickness (e.g., in mm, etc.), powder layer uniformity, and line offset. Such parameters can be adjusted and/or optimized to result in desired 3D printed object properties. For example, beam power, scan speed, spacing, layer thickness, etc., affect an energy density (e.g., average applied energy per volume of material, J/mm3). In some examples, the beam speed can be adjusted near an edge of the object to prevent overheating. Layer thickness (e.g., 50-150um) affects geometric accuracy of a fabricated object and can be varied depending on the type of 3D printer used, as well as other process parameters such as material powder particle size, etc. Additionally, a scanning pattern and scanning speed also affect the final 3D printed object microstructure and porosity. For example, a scanning pattern (e.g., cross-section of layer) represents the geometric track of the electron beam, laser beam, and/or other energy beam used to melt the metal powder to form a cross-section on a powder bed/build area. Such geometries can include outer contours, inner contours, and/or a hatch pattern, for example.

As shown in the system 100 of FIG. 1, the additive machine controller 120 and the analytics processor 130 are implemented separate from the additive manufacturing machine 110 to help preserve a secure environment and to minimize risk to additive manufacturing machine 110 performance. The authenticity and integrity of the analytics application code is securely protected with one or more integrated Trusted Platform Modules (e.g., implemented on one or more FPGAs, etc.), for example. As such, a root of trust is established between the analytics processor 130 and the additive manufacturing machine 110 (and, in some examples, the additive machine controller 120). Analytics results are displayed with live update on a web-based human machine interface (HMI). The HMI can be accessed by the printer's control computer and/or remotely via network connection, for example.

By providing the analytics processor 130 separate from the additive manufacturing machine 110 and the additive machine controller 120, the dedicated analytics processor 130 can perform high-compute processes without reducing efficiency or speed of the additive manufacturing machine 110 itself. The analytics processor 130 is isolated from the additive manufacturing machine 110, (gathering and) processing information from the additive manufacturing machine 110 without interfering with operation of the additive manufacturing machine 110 unless the processing reveals a problem and an adjustment to be made to the machine settings, process configuration, current and/or subsequent build, etc. The analytics processor 130 can examine specific processes of the additive manufacturing machine 110 (e.g., melting, recoating, etc.) as well as the overall health of the machine, process, build, etc., on a layer-by-layer basis. Certain examples provide a modular architecture that can be configured and extended to a plurality of product lines (e.g., M2, Mline, etc.), modalities (e.g., EBM, binder jet, etc.), and the like. Feedback and/or adjustment can be provided to the additive manufacturing machine 110 and/or the additive machine controller 120 during a build, for example. Additionally, layer-wise analysis can help to detect/record a moment at which a variation occurs, for example.

In the example system 100 of FIG. 1, the additive manufacturing machine 110 and its additive machine controller 120 are in communication with the analytics processor 130. As such, the additive machine controller 120 can act on information provided by the analytics processor 130 to adjust or correct operation of the additive manufacturing machine 110. The analytics processor 130 provides an analysis of sub-systems of the additive manufacturing machine 110 and its processes to generate build process optimization, inspection advice, and/or predictive machine maintenance, for example. The analytics processor 130 uses multi-sensor time series analysis, image analytics, correlation analysis, etc., across sensor, logfile, and other machine health and process data (images, meltpool emissivity, etc.). Near-real time analysis by the analytics processor 130 enables the additive manufacturing machine 110 and/or an associated user to make timely decisions, adjustments, etc., to affect machine/material as well as post-process work in progress (WIP) cost avoidance during a build (without having to wait or depend on post processing inspection), for example. The analytics processor 130 is a separate and secure analytics compute platform with a delay no longer than one layer behind the current layer being printed, for example, which does not interfere with the additive manufacturing machine 110 but allows near-real time monitoring and adjustment of the additive manufacturing machine 110, for example. The analytics processor 130 can include physics-based models leveraging system expertise and additive physics to model the structure, configuration, and operation of the additive manufacturing machine 110 and its associated process(es) and build(s), for example. Alternatively or additionally, the analytics processor 130 can include one or more data science models for diagnosis and/or prediction of machine, process, and/or build errors. In certain examples, the analytics processor 130 leverages one or more fusion models combining physics and data science to determine/predict an outcome. In certain examples, the analytics processor 130 is constructed with a modular architecture to help ensure faster adoption to new product lines and modalities (e.g., EBM, DMLM, BinderJet, DED, DLP, etc.) through easy reuse and 'swapping' of modality and/or product line software Docker containers (e.g., 20-30%) while retaining common analytic and software capabilities (e.g., 70%).

In certain examples, analytics code authenticity and integrity are protected with one or more integrated Trusted Platform Module (TPM). Use of the TPM(s) can provide a hardware root of trust for the analytics processor 130, the additive machine controller 120, etc. (e.g., establishing a trusted relationship). The TPM(s) can provide a tamper-proof grounding for detection and correction of errors, for example. The root of trust can include ensuring the authenticity of signed and/or otherwise certified analytics, for example. In certain examples, a combination of TPM and code-signing provides enhanced security with the root of trust to enable the analytics processor 130 to communicate with and affect the additive machine controller 120, the additive manufacturing machine 110, etc. The TPM supports disk encryption and boot chain to protect the authenticity and integrity of code on the analytics processor 130, for example. Signed/certified packages can be sent from the analytics processor 130 to the additive machine controller 120 and/or directly to the additive manufacturing machine 110 for secure update. In certain examples, an isolated environment, partition, or "sandbox" can be created at the analytics processor 130 and/or the additive machine controller 120 to test and compare potential build control algorithms for the additive manufacturing machine 110 to select one of the algorithms without negatively impacting the additive manufacturing machine 110 during the testing/simulation.

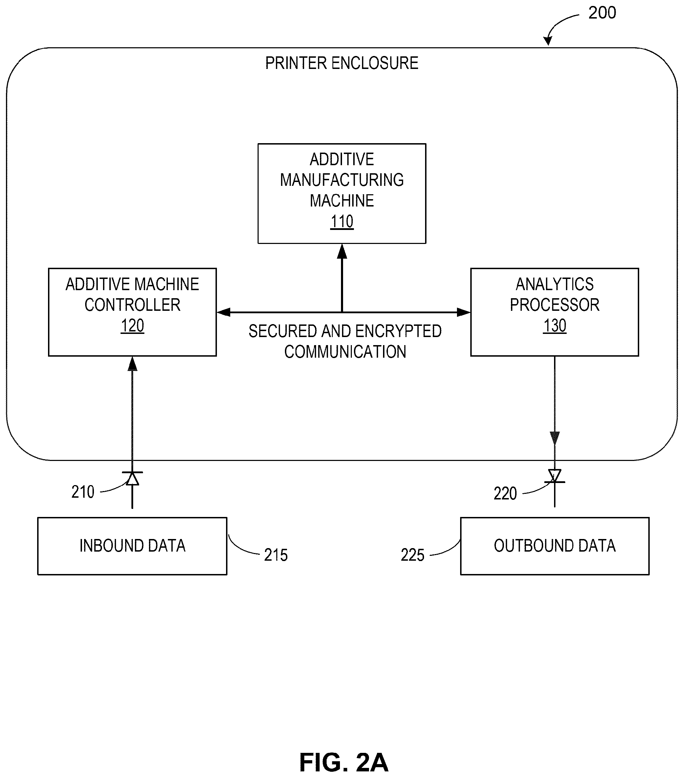

FIG. 2A illustrates an example secure additive manufacturing system 200. The example secure additive manufacturing system 200 includes one-way data diodes 210, 220 to regulate and restrict inbound and outbound data flow. As such, only certain data can be sent to the additive machine controller 120 and only certain data can be received from the analytics processor 130. Due to the physical structure of the data diode 210, 220 (e.g., allowing light/data to travel only in one direction from a send circuit to a receive circuit) data cannot flow against the one-way data diode 210, 220.

In certain examples, the inbound one-way data diode 210 is implemented as a standalone circuit. In other examples, the inbound one-way data diode 210 is embedded as a card or other circuit in the additive machine controller 120. In certain examples, the outbound one-way data diode 220 is implemented as a standalone circuit. In other examples, the outbound one-way data diode 220 is embedded as a card or other circuit in the analytics processor 130.

As shown in the example of FIG. 2A, the inbound data diode 210 restricts an inbound flow of data 215 into the secure additive manufacturing system 200. A flow of the inbound data 215 (e.g., build files, parameter files, etc.) is restricted by the inbound data diode 210 to only the additive machine controller 120, and software and/or other instructions running on the inbound data diode 210 can be used to verify and restrict inbound data 215 type, source, etc. For example, the inbound data diode 210 only includes one-way receive circuitry such that the inbound data diode 210 is not capable of transmitting data out of the secure additive manufacturing system 200. That is, the inbound data diode 210 includes a single fiber optic pathway for data from a send circuit to a receive circuit such that data, carried by light through the fiber optic, can only pass in one direction. The inbound data diode 210 is only able to pass data through to the additive machine controller 120. Since the inbound data diode 210 is only physically able to send data to the additive machine controller 120, the inbound data diode 210 creates a physical barrier or "air gap" between external devices as the secure additive manufacturing system 200. The inbound data diode 210 thus protects the secure additive manufacturing system 200 from data leakage, malware, other external threat, etc. The additive machine controller 120 can then communicate with the additive manufacturing machine 110 within the environment or architecture of the secure additive manufacturing system 200.

As shown in the example of FIG. 2A, the outbound data diode 220 restricts an outbound flow of data 225 from the secure additive manufacturing system 200. A flow of the outbound data 225 (e.g., file-based analytics output, live video of the additive manufacturing machine 110, data stream from the additive manufacturing machine 110 and/or the analytics processor 130, etc.) is restricted by the outbound data diode 220 to only from the analytics processor 130, and software and/or other instructions running on the outbound data diode 220 can be used to verify and restrict outbound data 225 type, destination, etc. For example, the outbound data diode 220 only includes one-way transmit circuitry such that the outbound data diode 220 is not capable of receiving data from an external source for entry into the secure additive manufacturing system 200. That is, the outbound data diode 210 includes a single fiber optic pathway for data from a send circuit to a receive circuit such that data, carried by light through the fiber optic, can only pass in one direction. The outbound data diode 220 is only able to send data from the analytics processor 130 out of the secure additive manufacturing system 200. Since the outbound data diode 220 is only physically able to send data out of the secure additive manufacturing system 200, the outbound data diode 220 creates a physical barrier or "air gap" between external devices as the secure additive manufacturing system 200. The outbound data diode 220 thus protects the secure additive manufacturing system 200 from data leakage, malware, other external threat, etc. The analytics processor 130 can then receive and/or otherwise gather data from the additive manufacturing machine 110 within the environment or architecture of the secure additive manufacturing system 200 and provide certain limited data 225 to an external device.

As such, the combination of the inbound data diode 210 and the outbound data diode 220 serve to physically isolate the secure additive manufacturing system 200 from external devices/systems. Only a tightly regulated subset of data is allowed in through the inbound data diode 210 and out through the outbound data diode 220. With malicious data, attacks, etc., unable to infiltrate and infect the secure additive manufacturing system 200 from an outside source, data integrity, system integrity, build integrity, and secure operations can benefit within the secure additive manufacturing system 200. The data diodes 210, 220 make it impossible for command and control traffic, data exfiltration, etc., to occur over the same channel. Rather than a firewall, the data diodes 210, 220 are physical structures that are physically unable to transmit data other than as they are configured, and protocols running on the data diodes 210, 220 provide "protocol breaks", which conceal network address and other information of the secure additive manufacturing system 200 from external devices, systems, etc. Protocol software running on the respective data diode 210, 220 also analyzes data packets to prevent malicious data or executable code from being hidden and transmitted through packet headers, for example.

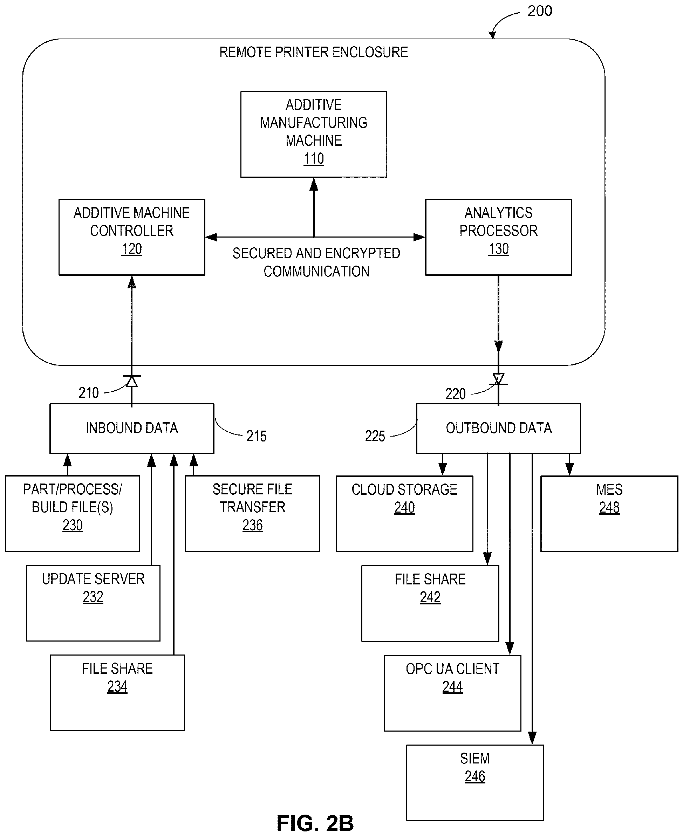

FIG. 2B illustrates a configuration of the example secure additive manufacturing system 200 in which the additive manufacturing system 200 is connected to a plurality of external devices/systems. The inbound data diode 210 accepts inbound data/files 215 for the additive machine controller 120 from a variety of systems, such as a workstation providing part, process, and/or build preparation file(s) (e.g., configuration, setting, etc.) 230, an update server 232, a file share 234, a secure file transfer 236, etc. As such, the inbound data diode 210 serves as a hardware and software gate keeper to regulate inbound data 215 into an enclosure of the additive manufacturing system 200.

Similarly, on the outbound side, the additive manufacturing system 200 is connected to a plurality of external devices/systems. The outbound data diode 220 provides outbound data/files 225 from the analytics processor 130 to a variety of systems, such as a cloud storage 240, a file share 242, an open platform communications unified architecture (OPC UA) client 244, security information and event monitoring (SIEM) 246, a manufacturing execution system (MES) 248, etc. As such, the outbound data diode 220 serves as a hardware and software gate keeper to regulate outbound data 225 from the enclosure of the additive manufacturing system 200 (and preventing a backflow of data through that channel).

As shown in the example of FIG. 2B, the SIEM device 246 can receive outbound data 225 to log, monitor, detect, and alert regarding potentially significant security events, anomalies, unexpected access, data movement, etc. Such monitoring and auditing can be leveraged by security operations and information technology teams, for example.

Additionally, as shown in the example of FIG. 2B, when an update or patch is to be downloaded, only validated patching of the OS and additive manufacturing platform from the update server 232, for example, is allowed to manage software supply chain vulnerabilities. Only essential update activities are allowed by the data diode 210 to bolster system security and mitigate exploitation risk.

The inbound data diode 210 and associated enforcement mechanism also enable interconnection of the secure additive manufacturing system 200 with external systems to facilitate intermediary activities such as build preparation (e.g., slicing, scan path, other off-machine activity, etc.) with one or more files 230 that can be executed by the additive machine controller 120 in preparation for a build by the additive manufacturing machine 110 (and in configuration of the additive manufacturing machine 110 for the build).

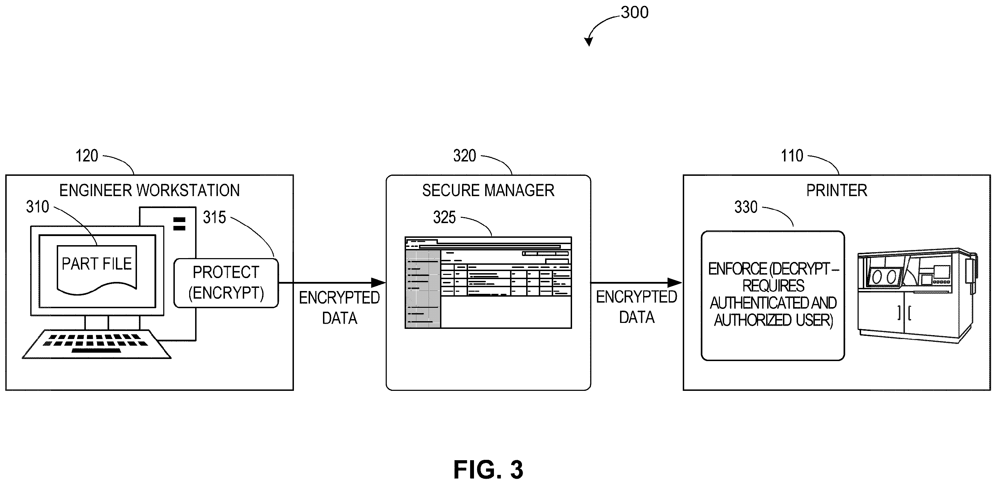

FIG. 3 illustrates an example configuration 300 in which the additive machine controller 120 and/or another workstation prepares a part design or build file 310 to form a protected (e.g., encrypted) file 315, which is transmitted as encrypted data to a secure manager 320 and/or other enforcement mechanism. Within and/or outside the environment of the secure additive manufacturing system 200, a user is authenticated and authorized to help ensure confidentiality and integrity of the build file 310 and/or other data being sent to the additive machine controller 120 from outside the secure additive manufacturing system 200 and within the secure additive manufacturing system 200 to the additive manufacturing machine 110. A secure manager 320, running on the data diode 210, the additive machine controller 120, and/or another computing device, verifies the encrypted data/file 315 and associated source and destination. The file 315 can then be decrypted at/for the additive manufacturing machine 110. The secure manager 320 can also verify that the additive manufacturing machine 110 has rights to and is able to use the file 315, for example. In certain examples, the secure manager 320 can include a user interface 325 that can enable visualization of and interaction with file contents, access permissions, usage rights, etc. The secure manager 320 can thus provide an enforcement mechanism 330 including decryption for an authenticated and authorized user, etc., to help ensure that authorized content reaches the additive machine controller 120 and, by extension, the additive manufacturing machine 110. The secure manager 320 can also facilitate intermediary activities such as build preparation (e.g., slicing, scan path, other off-machine activity, etc.) can be executed by the additive machine controller 120 in preparation of a build by the additive manufacturing machine 110 (and in configuration of the additive manufacturing machine 110 for the build).

As such, certain examples provide a hardware root of trust, which is a trusted foundation formed at the time of manufacture (e.g., of the additive manufacturing machine 110 and other computing devices of the additive manufacturing system 200, etc.) using a secure cryptographic processor such as a TPM, secure enclave, etc. The additive manufacturing machine 110, the additive machine controller 120, and the analytics processor 130 include a secure, trusted boot sequence that only loads trusted and validated operating system components, which protects the additive manufacturing system 200 from threats that could compromise the operating system before it loads and also reduces risk of unauthorized or malicious activity. A hardened, secure, and verifiable operating system with strong access controls is aligned with strict security technical implementation guides and protocols to protect the integrity of the secure additive manufacturing system 200, which forms a secure operating environment with allowed applications, files, and encryption. This prevents unknown/untrusted applications from running, unknown/untrusted files from being processed, and ensures data is encrypted. Digitally signed software, files, and updates, as well as secure development practices, ensure software/build file authenticity. Secure transmission into and out of the secure additive manufacturing system 200 via the one-way data diodes 210, 220, as well as secure file transfer, provide multiple layers of security and encryption to reduce risk of modification, tampering, or malicious intrusion. Enforced restrictions and permissions allow only authorized, authenticated users and/or processes to take authorized, auditable actions in the additive manufacturing system 200 through access controls based on a zero-trust approach. Security events, anomalies, unexpected access, and data movement are monitored and logged to detect and alert against unauthorized activity/access. System security and mitigation of exploitation risk of the additive manufacturing system 200 can also be reduced through validated patching of the operating system and additive manufacturing applications, for example. This combination forms an additive chain of trust securing the secure additive manufacturing system 200 from intrusion, exploitation, and other malicious activity.

While example implementations of the additive manufacturing machine 110, the additive machine controller 120, the analytics processor 130, data diodes 210, 220, and, more generally, the secure additive manufacturing system 200, etc., are illustrated in FIGS. 1-3, one or more of the elements, processes and/or devices can be combined, divided, re-arranged, omitted, eliminated and/or implemented in any other way. Further, one or more of the elements of FIGS. 1-3 can be implemented by hardware, software, firmware and/or any combination of hardware, software and/or firmware. Thus, for example, any of the example elements of FIGS. 1-3 can be implemented by one or more analog or digital circuit(s), logic circuits, programmable processor(s), programmable controller(s), graphics processing unit(s) (GPU(s)), video processing unit(s) (VPU(s)), accelerator card(s), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example elements of FIGS. 1-3 is/are hereby expressly defined to include a non-transitory computer readable storage device or storage disk (also referred to as a tangible computer readable storage device or storage disk) such as a memory, a digital versatile disk (DVD), a compact disk (CD), a Blu-ray disk, etc. including the software and/or firmware. Further still, the elements of FIGS. 1-3 may include one or more elements, processes and/or devices in addition to, or instead of, those illustrated in FIGS. 1-3, and/or may include more than one of any or all of the illustrated elements, processes, and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

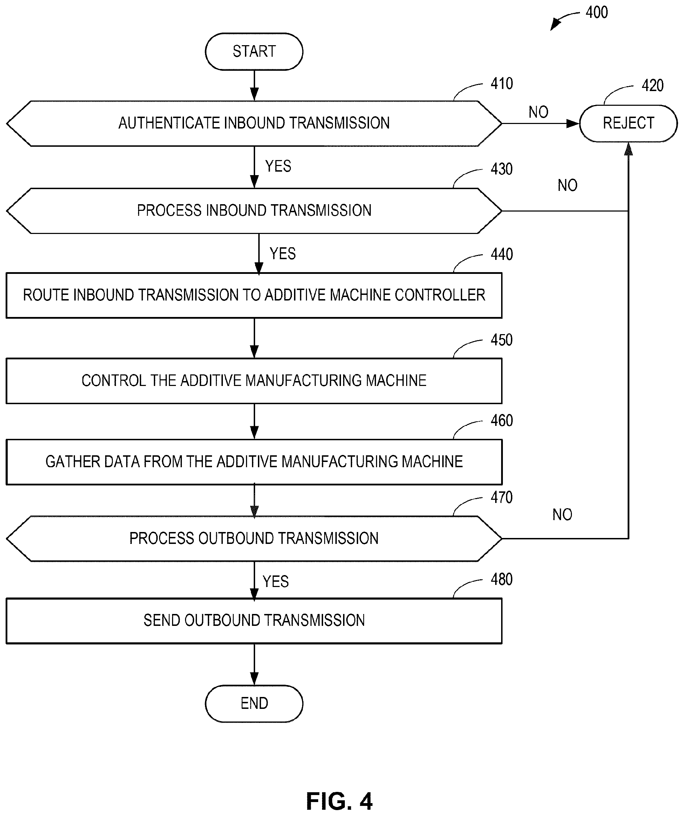

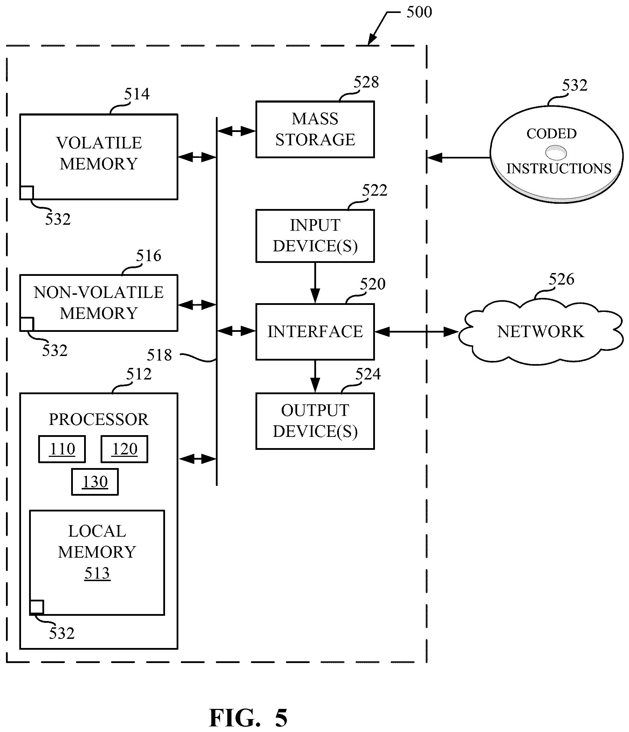

A flowchart representative of example hardware logic, machine readable instructions, hardware implemented state machines, and/or any combination thereof for implementing the example secure additive manufacturing system 200 are shown in FIG. 4. The machine readable instructions may be one or more executable programs or portion(s) of an executable program for execution by a computer processor and/or processor circuitry, such as the example data diodes 210, 220, the example additive machine controller 120, the example additive manufacturing machine 110, the example analytics processor 130, and/or the example processor platform 500 discussed below in connection with FIG. 5. The program may be embodied in software stored on a non-transitory computer readable storage medium such as a CD-ROM, a floppy disk, a hard drive, a DVD, a Blu-ray disk, or a memory associated with the processor 512, but the entire program and/or parts thereof could alternatively be executed by a device other than the processor 512 and/or embodied in firmware or dedicated hardware. Further, although the example program is described with reference to the flowchart illustrated in FIG. 4, many other methods of implementing the example secure additive manufacturing system 200 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but may require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example process(es) of FIG. 4 can be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

FIG. 4 is a flow diagram of an example method 400 for secure transmission of electronic files in the secure additive manufacturing system 200. At block 410, an inbound transmission 215 is received at the inbound data diode 210 and processed to authenticate a source of the inbound transmission 215. If the source is not authenticated, then, at block 420, the inbound transmission 215 is rejected.

If the source of the inbound transmission 215 is authenticated, then, at block 430, the inbound transmission 215 is processed by the inbound data diode 210. The data diode 210 can process the file and/or other data of the inbound transmission 215 to verify the type of inbound transmission 215 (e.g., an authorized build file and/or parameter file, etc.), the format/content of the inbound transmission 215, etc., to ensure that the file/data is of an acceptable type and its content is secure and suitable for entry into the secure additive manufacturing system 200. If the inbound transmission 215 is not acceptable, then at block 420, the inbound transmission 215 is rejected.

If the inbound transmission 215 is acceptable, then, at block 440, the inbound transmission 215 is routed to the additive machine controller 120. At block 450, the received file/data is used by the additive machine controller 120 to control the additive manufacturing machine 110. For example, the received build file, parameter file, etc., is executed and/or otherwise used by the additive machine controller 120 to adjust a configuration or setting of the additive manufacturing machine, initiate and/or modify a build using the additive manufacturing machine 110, configure monitoring of the additive manufacturing machine 110, etc.

At block 460, output from the additive manufacturing machine 110 is captured at the analytics processor 130. For example, data regarding operation of the additive manufacturing machine 110, build performance, part quality, log files, alerts, etc., can be pulled from the additive manufacturing machine 110 and/or provided by the additive manufacturing machine 110 to the analytics processor 130. The analytics processor 130 can process such data to generate analytics and/or instructions for other additive manufacturing machines, cross-build and/or cross-device analytics, etc.

At block 470, data is provided to the outbound data diode 220 for transmission. At block 480, the outbound data diode 220 processes the data for outbound transmission 225. For example, the outbound data diode 220 processes the data to ensure that the data is of an authorized type, format, content, etc., for outbound transmission. The outbound data diode 220 ensure that no malicious inbound traffic or unauthorized outbound control is masked in the data for outbound transmission. If the outbound data diode 220 determines that the data for outbound transmission is invalid and/or unauthorized, then, at block 420, the outbound transmission is rejected. If the outbound transmission 225 is approved by the outbound data diode 220, then the outbound data diode 220 sends the outbound data transmission 225 outside the secure additive manufacturing system 200.

As such, certain examples provide a hardware and software secure system to help ensure integrity of an additive manufacturing environment. Faced with malicious attacks and intrusions that can result in weakening of a manufactured part, theft of data, theft of intellectual property, etc., certain examples provide a physical hardware barrier through a pair of one-way data diodes bolstered by software processes and associated protocols to authenticate, authorize, and regulate access. Such new and additional hardware, processes, and protocols provide an improved technological solution to a technical problem of limiting access and ensuring security and integrity of an additive manufacturing system that is connected to external systems via a network. Certain examples enable the additive manufacturing system to be a separate, secure environment that is isolated for security purposes and yet able to receive certain content and send certain content through the channels physically defined by the one-way data diodes.

FIG. 5 is a block diagram of an example processor platform 500 structured to execute the instructions of FIG. 4 to implement and/or operate the example secure additive manufacturing system 200 and/or its elements such as the data diodes 210, 220, the additive manufacturing machine 110, the additive machine controller 120, the analytics processor 130, etc. The processor platform 500 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, or any other type of computing device.

The processor platform 500 of the illustrated example includes a processor 512 (also referred to herein as processor circuitry). The processor 512 of the illustrated example is hardware. For example, the processor 512 can be implemented by one or more integrated circuits, logic circuits, microprocessors, GPUs, DSPs, or controllers from any desired family or manufacturer. The hardware processor may be a semiconductor based (e.g., silicon based) device.

The processor 512 of the illustrated example includes a local memory 513 (e.g., a cache and/or other memory circuitry). The processor 512 of the illustrated example is in communication with a main memory/memory circuitry including a volatile memory 514 and a non-volatile memory 516 via a bus 518. The volatile memory 514 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 516 may be implemented by flash memory and/or any other desired type of memory device/memory circuitry. Access to the main memory 514, 516 is controlled by a memory controller. As used herein, the memory 513, 514, and/or 516 can be referred to as memory circuitry.

The processor platform 500 of the illustrated example also includes an interface circuit 520. The interface circuit 520 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 522 are connected to the interface circuit 520. The input device(s) 522 permit(s) a user to enter data and/or commands into the processor 512. The input device(s) can be implemented by, for example, an audio sensor, a microphone, a camera (still or video), a keyboard, a button, a mouse, a touchscreen, a track-pad, a trackball, and/or a voice recognition system.

One or more output devices 524 are also connected to the interface circuit 520 of the illustrated example. The output devices 524 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, and/or speaker. The interface circuit 520 of the illustrated example, thus, typically includes a graphics driver card, a graphics driver chip and/or a graphics driver processor.

The interface circuit 520 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 526. The communication can be via, for example, an Ethernet connection, a digital subscriber line (DSL) connection, a telephone line connection, a coaxial cable system, a satellite system, a line-of-site wireless system, a cellular system, etc.

The processor platform 500 of the illustrated example also includes one or more mass storage devices 528 for storing software and/or data. Examples of such mass storage devices 528 include floppy disk drives, hard drive disks, compact disk drives, Blu-ray disk drives, redundant array of independent disks (RAID) systems, and digital versatile disk (DVD) drives.

The machine executable instructions 532 to implement the method 400 of FIG. 4 may be stored in the mass storage device 528, in the volatile memory 514, in the non-volatile memory 516, and/or on a removable non-transitory computer readable storage medium such as a CD or DVD.

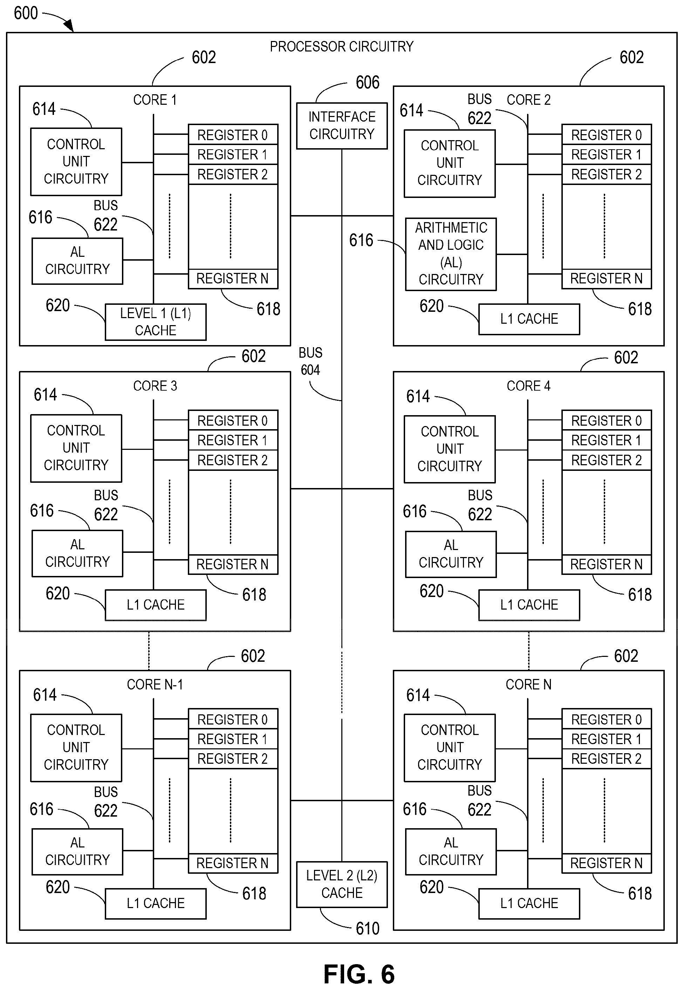

FIG. 6 is a block diagram of an example implementation of the processor circuitry 512 of FIG. 5. In this example, the processor circuitry 512 of FIG. 5 is implemented by a microprocessor 600. For example, the microprocessor 600 may implement multi-core hardware circuitry such as a CPU, a DSP, a GPU, an XPU, etc. Although it may include any number of example cores 602 (e.g., 1 core), the microprocessor 600 of this example is a multi-core semiconductor device including N cores. The cores 602 of the microprocessor 600 may operate independently or may cooperate to execute machine readable instructions. For example, machine code corresponding to a firmware program, an embedded software program, or a software program may be executed by one of the cores 602 or may be executed by multiple ones of the cores 602 at the same or different times. In some examples, the machine code corresponding to the firmware program, the embedded software program, or the software program is split into threads and executed in parallel by two or more of the cores 602. The software program may correspond to a portion or all of the machine readable instructions and/or operations represented by the flowchart of FIG. 4.

The cores 602 may communicate by an example bus 604. In some examples, the bus 604 may implement a communication bus to effectuate communication associated with one(s) of the cores 602. For example, the bus 604 may implement at least one of an Inter-Integrated Circuit (I2C) bus, a Serial Peripheral Interface (SPI) bus, a PCI bus, or a PCIe bus. Additionally or alternatively, the bus 604 may implement any other type of computing or electrical bus. The cores 602 may obtain data, instructions, and/or signals from one or more external devices by example interface circuitry 606. The cores 602 may output data, instructions, and/or signals to the one or more external devices by the interface circuitry 606. Although the cores 602 of this example include example local memory 620 (e.g., Level 1 (L1) cache that may be split into an L1 data cache and an L1 instruction cache), the microprocessor 600 also includes example shared memory 610 that may be shared by the cores (e.g., Level 2 (L2_ cache)) for high-speed access to data and/or instructions. Data and/or instructions may be transferred (e.g., shared) by writing to and/or reading from the shared memory 610. The local memory 620 of each of the cores 602 and the shared memory 610 may be part of a hierarchy of storage devices including multiple levels of cache memory and the main memory (e.g., the main memory 514, 516 of FIG. 5). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 602 may be referred to as a CPU, DSP, GPU, etc., or any other type of hardware circuitry. Each core 602 includes control unit circuitry 614, arithmetic and logic (AL) circuitry (sometimes referred to as an ALU) 616, a plurality of registers 618, the L1 cache 620, and an example bus 622. Other structures may be present. For example, each core 602 may include vector unit circuitry, single instruction multiple data (SIMD) unit circuitry, load/store unit (LSU) circuitry, branch/jump unit circuitry, floating-point unit (FPU) circuitry, etc. The control unit circuitry 614 includes semiconductor-based circuits structured to control (e.g., coordinate) data movement within the corresponding core 602. The AL circuitry 616 includes semiconductor-based circuits structured to perform one or more mathematic and/or logic operations on the data within the corresponding core 602. The AL circuitry 616 of some examples performs integer based operations. In other examples, the AL circuitry 616 also performs floating point operations. In yet other examples, the AL circuitry 616 may include first AL circuitry that performs integer based operations and second AL circuitry that performs floating point operations. In some examples, the AL circuitry 616 may be referred to as an Arithmetic Logic Unit (ALU). The registers 618 are semiconductor-based structures to store data and/or instructions such as results of one or more of the operations performed by the AL circuitry 616 of the corresponding core 602. For example, the registers 618 may include vector register(s), SIMD register(s), general purpose register(s), flag register(s), segment register(s), machine specific register(s), instruction pointer register(s), control register(s), debug register(s), memory management register(s), machine check register(s), etc. The registers 618 may be arranged in a bank as shown in FIG. 6. Alternatively, the registers 618 may be organized in any other arrangement, format, or structure including distributed throughout the core 602 to shorten access time. The bus 622 may implement at least one of an I2C bus, a SPI bus, a PCI bus, or a PCIe bus.

Each core 602 and/or, more generally, the microprocessor 600 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 600 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

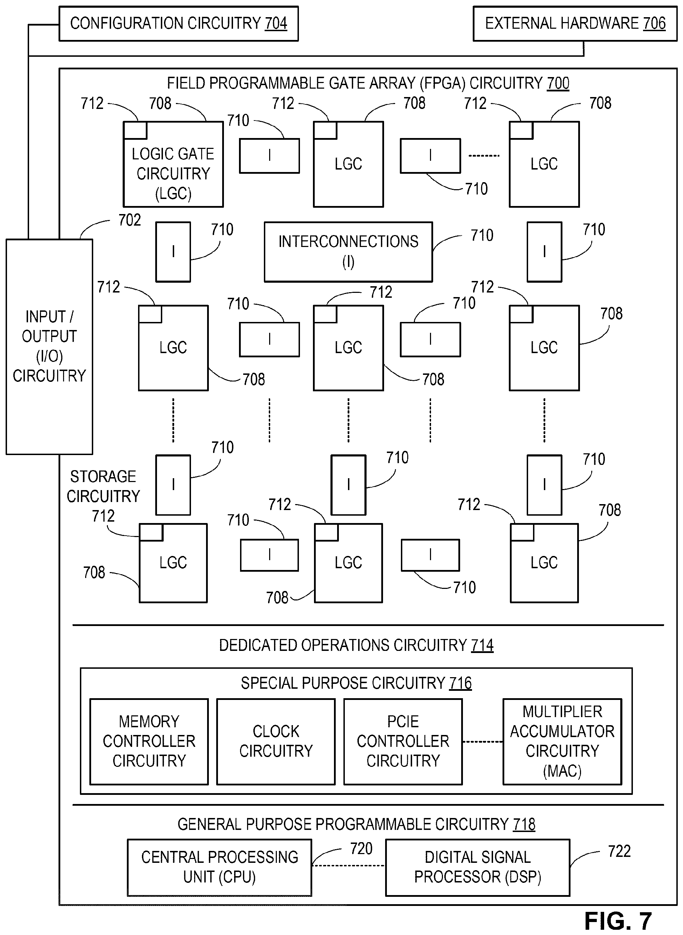

FIG. 7 is a block diagram of another example implementation of the processor circuitry 512 of FIG. 5. In this example, the processor circuitry 512 is implemented by FPGA circuitry 700. The FPGA circuitry 700 can be used, for example, to perform operations that could otherwise be performed by the example microprocessor 600 of FIG. 6 executing corresponding machine readable instructions. However, once configured, the FPGA circuitry 700 instantiates the machine readable instructions in hardware and, thus, can often execute the operations faster than they could be performed by a general purpose microprocessor executing the corresponding software.

More specifically, in contrast to the microprocessor 600 of FIG. 6 described above (which is a general purpose device that may be programmed to execute some or all of the machine readable instructions represented by the flowchart of FIG. 4 but whose interconnections and logic circuitry are fixed once fabricated), the FPGA circuitry 700 of the example of FIG. 7 includes interconnections and logic circuitry that may be configured and/or interconnected in different ways after fabrication to instantiate, for example, some or all of the machine readable instructions represented by the flowchart of FIG. 4. In particular, the FPGA circuitry 700 may be thought of as an array of logic gates, interconnections, and switches. The switches can be programmed to change how the logic gates are interconnected by the interconnections, effectively forming one or more dedicated logic circuits (unless and until the FPGA circuitry 700 is reprogrammed). The configured logic circuits enable the logic gates to cooperate in different ways to perform different operations on data received by input circuitry. Those operations may correspond to some or all of the software represented by the flowchart of FIG. 4. As such, the FPGA circuitry 700 may be structured to effectively instantiate some or all of the machine readable instructions of the flowcharts of FIG. 4 as dedicated logic circuits to perform the operations corresponding to those software instructions in a dedicated manner analogous to an ASIC. Therefore, the FPGA circuitry 700 may perform the operations corresponding to the some or all of the machine readable instructions of FIG. 4 faster than the general purpose microprocessor can execute the same.

In the example of FIG. 7, the FPGA circuitry 700 is structured to be programmed (and/or reprogrammed one or more times) by an end user by a hardware description language (HDL) such as Verilog. The FPGA circuitry 700 of FIG. 7, includes example input/output (I/O) circuitry 702 to obtain and/or output data to/from example configuration circuitry 704 and/or external hardware (e.g., external hardware circuitry) 706. For example, the configuration circuitry 704 may implement interface circuitry that may obtain machine readable instructions to configure the FPGA circuitry 700, or portion(s) thereof. In some such examples, the configuration circuitry 704 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 706 may implement the microprocessor 600 of FIG. 6. The FPGA circuitry 700 also includes an array of example logic gate circuitry 708, a plurality of example configurable interconnections 710, and example storage circuitry 712. The logic gate circuitry 708 and interconnections 710 are configurable to instantiate one or more operations that may correspond to at least some of the machine readable instructions of FIG. 4 and/or other desired operations. The logic gate circuitry 708 shown in FIG. 7 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 708 to enable configuration of the electrical structures and/or the logic gates to form circuits to perform desired operations. The logic gate circuitry 708 may include other electrical structures such as look-up tables (LUTs), registers (e.g., flip-flops or latches), multiplexers, etc.

The interconnections 710 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 708 to program desired logic circuits.

The storage circuitry 712 of the illustrated example is structured to store result(s) of the one or more of the operations performed by corresponding logic gates. The storage circuitry 712 may be implemented by registers or the like. In the illustrated example, the storage circuitry 712 is distributed amongst the logic gate circuitry 708 to facilitate access and increase execution speed.

The example FPGA circuitry 700 of FIG. 7 also includes example Dedicated Operations Circuitry 714. In this example, the Dedicated Operations Circuitry 714 includes special purpose circuitry 716 that may be invoked to implement commonly used functions to avoid the need to program those functions in the field. Examples of such special purpose circuitry 716 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 700 may also include example general purpose programmable circuitry 718 such as an example CPU 720 and/or an example DSP 722. Other general purpose programmable circuitry 718 may additionally or alternatively be present such as a GPU, an XPU, etc., that can be programmed to perform other operations.

As such, the example FPGA circuitry 700 can be used to (re)align and/or calibrate multi-laser alignment, stitching, other aspect of additive build execution, programming, etc., In certain examples, the FPGA circuitry 700 can be used for scoring and data processing, together and/or in further combination with hyper-logging of data/events, etc.

Although FIGS. 6 and 7 illustrate two example implementations of the processor circuitry 512 of FIG. 5, many other approaches are contemplated. For example, as mentioned above, modern FPGA circuitry may include an on-board CPU, such as one or more of the example CPU 720 of FIG. 7. Therefore, the processor circuitry 512 of FIG. 5 may additionally be implemented by combining the example microprocessor 600 of FIG. 6 and the example FPGA circuitry 700 of FIG. 7. In some such hybrid examples, a first portion of the machine readable instructions represented by the flowchart of FIG. 4 may be executed by one or more of the cores 602 of FIG. 6 and a second portion of the machine readable instructions represented by the flowcharts of FIG. 4 may be executed by the FPGA circuitry 700 of FIG. 7.

In certain examples, the FPGA circuitry 700 is leveraged for edge computing. In certain examples, the FPGA circuitry 700 is implemented for improved timeliness and/or data fusion. A TPM can also be incorporated to provide and enable hardware and/or software root of trust security for stronger compute/memory/CPU.GPU/etc., at a second/sub-second time constraint. The FPGA circuitry 700 provides millisecond analysis and response such that some data can flow to the FPGA circuitry 700 to provide a quicker response from the FPGA circuitry 700. In certain examples, a connection to the FPGA circuitry 700 allows insights from the FPGA circuitry 700 to flow to another component to improve the detection and correction of errors.

It should now be understood that that the devices, systems, and methods described herein control transmission of content (e.g., build files, parameter files, log files, monitoring data, etc.) into and out of a secure additive manufacturing system. New hardware is provided that is particularly configured for this secure additive manufacturing environment. Such physical hardware and associated processes and protocols are not possible to implement manually and rely on new technical structure to achieve. In addition, the systems and methods according to the present disclosure enhance the integrity, security, and quality of additive manufacturing machine operation and resulting built parts by preventing tampering and/or other malicious action to the additive manufacturing machine. While certain examples are described in the context of a secure additive manufacturing environment, systems and methods described herein can also be extended to other secure industrial controls, secure information technology and/or operational technology environments, other manufacturing, etc.

Further aspects of the invention are provided by the subject matter of the following clauses:

An example apparatus includes: an inbound one-way data diode to receive, authenticate, and route an inbound file in a first direction within a secure additive manufacturing system, the inbound one-way data diode unable to transmit data out of the secure additive manufacturing system in a second direction; an additive manufacturing machine to build a part, the build of the part adjusted by the inbound file when authenticated by the inbound one-way data diode; and an outbound one-way data diode to authenticate and transmit outbound data in the second direction to an external system outside the secure additive manufacturing system, the outbound one-way data diode unable to transmit data into the secure additive manufacturing system in the first direction.

The example apparatus of the preceding clause further includes an additive machine controller in communication with the additive manufacturing machine, the additive machine controller to process the inbound file to configure the additive manufacturing machine.

The apparatus of any preceding clause, wherein the inbound one-way data diode is embedded in the additive machine controller.

The apparatus of any preceding clause further includes an analytics processor in communication with the additive manufacturing machine, the analytics processor to gather and process data from the additive manufacturing machine to form the outbound data.

The apparatus of any preceding clause, wherein the outbound one-way data diode is embedded in the analytics processor.

The apparatus of any preceding clause, wherein the inbound file includes at least one of a build file or a parameter file.

The apparatus of any preceding clause, wherein the inbound file is encrypted.

The apparatus of any preceding clause, wherein the outbound data includes at least one of analytics data, a video file, or a stream.

The apparatus of any preceding clause, wherein at least one of the inbound one-way data diode or the outbound one-way data diode includes a secure manager.

The apparatus of any preceding clause, wherein the secure manager is to decrypt the inbound file and verify that the additive manufacturing machine has permission to use the inbound file.

The apparatus of any preceding clause, wherein the inbound one-way data diode is to reject the inbound file when the inbound file is not authenticated.

The apparatus of any preceding clause, wherein the outbound one-way data diode is to reject the outbound data when the outbound data is not authenticated.

The apparatus of any preceding clause, wherein the inbound one-way data diode, the additive manufacturing machine, and the outbound one-way data diode form a chain of trust.

The apparatus of any preceding clause, wherein at least one of the inbound one-way data diode, the additive manufacturing machine, or the outbound one-way data diode includes a trusted platform module as a root of the chain of trust.

A method of securing an additive manufacturing environment includes: authenticating, at an inbound one-way data diode, an inbound file; routing, when the inbound file is authenticated, the inbound file in a first direction within a secure additive manufacturing system, the inbound one-way data diode unable to transmit data out of the secure additive manufacturing system in a second direction; controlling an additive manufacturing machine according to the inbound file; gathering data from the additive manufacturing machine to form outbound data; authenticating, at an outbound one-way data diode, the outbound data; and transmitting, when the outbound data is authenticated, the outbound data in the second direction to an external system outside the secure additive manufacturing system, the outbound one-way data diode unable to transmit data into the secure additive manufacturing system in the first direction.

The method of any preceding clause further includes processing, at an additive machine controller in communication with the additive manufacturing machine, the inbound file to configure the additive manufacturing machine.

The method of any preceding clause further includes processing, at an analytics processor in communication with the additive manufacturing machine, the data from the additive manufacturing machine to form the outbound data.

The method of any preceding clause further includes decrypting the inbound file and verifying that the additive manufacturing machine has permission to use the inbound file.

The method of any preceding clause further includes rejecting, when the inbound file is not authenticated, the inbound file at the inbound one-way data diode.

The method of any preceding clause further includes rejecting, when the outbound data is not authenticated, the outbound data at the outbound one-way data diode.

An example additive manufacturing machine includes: an inbound one-way data diode to receive, authenticate, and route an inbound file in a first direction to secure the additive manufacturing machine, the inbound one-way data diode unable to transmit data out of the additive manufacturing machine in a second direction, the build of a part by the additive manufacturing machine adjusted by the inbound file when authenticated by the inbound one-way data diode; and an outbound one-way data diode to authenticate and transmit outbound data in the second direction to an external system outside the additive manufacturing machine, the outbound one-way data diode unable to transmit data into the additive manufacturing machine in the first direction.

While particular examples have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. An apparatus comprising:
an inbound one-way data diode (210) to receive, authenticate, and route an inbound file (215) in a first direction within a secure additive manufacturing system (200), the inbound one-way data diode (210) unable to transmit data out of the secure additive manufacturing system (200) in a second direction;
an additive manufacturing machine (110) to build a part, the build of the part adjusted by the inbound file (215) when authenticated by the inbound one-way data diode (210); and
an outbound one-way data diode (220) to authenticate and transmit outbound data (225) in the second direction to an external system outside the secure additive manufacturing system (200), the outbound one-way data diode (220) unable to transmit data into the secure additive manufacturing system (200) in the first direction.

2. The apparatus of claim 1, further including an additive machine controller (120) in communication with the additive manufacturing machine (110), the additive machine controller (120) to process the inbound file (215) to configure the additive manufacturing machine (110).

3. The apparatus of claim 2, wherein the inbound one-way data diode (210) is embedded in the additive machine controller (120).

4. The apparatus of any preceding claim, further including an analytics processor (130) in communication with the additive manufacturing machine (110), the analytics processor (130) to gather and process data from the additive manufacturing machine (110) to form the outbound data (225).

5. The apparatus of claim 4, wherein the outbound one-way data diode (220) is embedded in the analytics processor (130).

6. The apparatus of any preceding claim, wherein the inbound file (215) includes at least one of a build file or a parameter file.

7. The apparatus of any preceding claim, wherein the inbound file (215) is encrypted.

8. The apparatus of any preceding claim, wherein the outbound data (225) includes at least one of analytics data, a video file, or a stream.

9. The apparatus of any preceding claim, wherein at least one of the inbound one-way data diode (210) or the outbound one-way data diode (220) includes a secure manager (320).

10. The apparatus of claim 9, wherein the secure manager is to decrypt the inbound file (215) and verify that the additive manufacturing machine (110) has permission to use the inbound file (215).

11. The apparatus of any preceding claim, wherein the inbound one-way data diode (210) is to reject the inbound file (215) when the inbound file (215) is not authenticated.

12. The apparatus of any preceding claim, wherein the outbound one-way data diode (220) is to reject the outbound data (225) when the outbound data (225) is not authenticated.

13. The apparatus of any preceding claim, wherein the inbound one-way data diode (210), the additive manufacturing machine (110), and the outbound one-way data diode (210) form a chain of trust.

14. The apparatus of claim 13, wherein at least one of the inbound one-way data diode (210), the additive manufacturing machine (110), or the outbound one-way data diode (220) includes a trusted platform module as a root of the chain of trust.

15. A method of securing an additive manufacturing environment, the method comprising:
authenticating, at an inbound one-way data diode (210), an inbound file (215);
routing, when the inbound file (215) is authenticated, the inbound file in a first direction within a secure additive manufacturing system (200), the inbound one-way data diode (210) unable to transmit data out of the secure additive manufacturing system (200) in a second direction;
controlling an additive manufacturing machine (110) according to the inbound file (215);
gathering data from the additive manufacturing machine (110) to form outbound data (225);
authenticating, at an outbound one-way data diode (220), the outbound data (225); and
transmitting, when the outbound data (225) is authenticated, the outbound data (225) in the second direction to an external system outside the secure additive manufacturing system (200), the outbound one-way data diode (220) unable to transmit data into the secure additive manufacturing system (200) in the first direction.
